# EUROPEAN PATENT SPECIFICATION

(11) **EP 4 559 722 B1**
(45) Date of publication and mention of the grant of the patent: **01.04.2026**
(21) Application number: 24211179.7
(22) Date of filing: 06.11.2024
(51) Int. Cl.: B60L 3/00, G01R 31/36, H01M 10/42, H01M 10/48, H01M 50/209, H01M 50/242, B60L 58/10, H01M 50/249, H01M 50/284

(54) **BATTERY PACK, VEHICLE AND MONITORING METHOD FOR THERMAL RUNAWAY THEREOF**
BATTERIEPACK, FAHRZEUG UND ÜBERWACHUNGSVERFAHREN FÜR THERMISCHES DURCHGEHEN DAVON
BLOC-BATTERIE, VÉHICULE ET PROCÉDÉ DE SURVEILLANCE POUR UN EMBALLEMENT THERMIQUE ASSOCIÉ

(30) Priority: 27.11.2023 CN 202311602705
(43) Date of publication of application: 28.05.2025
(73) Proprietor: Eve Energy Co. Ltd., Huizhou, Guangdong 516000 (CN)
(72) Inventor: Zhou, Hongquan, Huizhou, Guangdong, 516000 (CN)
(74) Representative: Michalski Hüttermann & Partner Patentanwälte mbB

(56) References cited:
- US-A1- 2017 077 561
- US-A1- 2018 287 223
- US-B2- 11 658 350
- US-B2- 11 799 138

## Description

### TECHNICAL FIELD

The present disclosure relates to the technical field of batteries and, particularly, to a battery pack, a vehicle, and a monitoring method for thermal runaway thereof.

### BACKGROUND

A battery pack is a core component of new energy vehicles, providing energy for their operation. During use, due to manufacturing defects or in extreme cases such as strong impact, thermal runaway may occur in the battery pack, and the batteries inside the battery pack may swell and deform.

To ensure the safety of passengers, the battery pack needs to send a thermal runaway warning signal 5 minutes before the thermal runaway reaches the passenger compartment when thermal runaway occurs, so that the passengers may have enough time to escape. Generally, the monitoring of thermal runaway of a battery pack employs monitoring of temperature signals or voltage signals.

In related technologies, a negative temperature coefficient (NTC) thermistor used to collect temperature signals is susceptible to environmental influences when collecting temperature signals. Alternatively, the pressure signal may also change significantly when the vehicle is driven from a low altitude to a high altitude, which may lead to a false alarm.
US 2017/077561 A1 refers to a method for determining an abnormality in an assembled battery that is formed by connecting, in series, a plurality of parallel bodies each formed by connecting a plurality of secondary battery cells in parallel, including detecting swelling in each of the secondary battery cells by using a detection sensor mounted on each of the secondary battery cells, and determining, based on swelling detected in two or more of the secondary battery cells, that an abnormality has occurred in a specific secondary battery cell among the two or more of the secondary battery cells.
US 11 799 138 B2 refers to an apparatus for detecting a thermal runaway of a battery for an electric vehicle, including: an exterior case; a plurality of battery cells provided inside the exterior case; a sensing module provided in one of the plurality of battery cells and detecting deformation amount of the battery cell; and a printed circuit board transmitting a voltage and a temperature of the battery cell, and the deformation amount of the battery cell detected by the sensing module, to a battery management system.
US 11 658 350 B2 refers to various implementations of a smart battery management system. An example method includes identifying sensor data of a cell in a battery system; predicting, based on the sensor data, a failure event of the cell; and preventing the failure event by activating a control circuit connected to the cell.
US 2018/287223 A1 refers to a power battery pack including several pouch or hard-shelled electrochemical cells. A safety structure for the power battery pack may include an expansion absorption layer, a supporting and fixing tray, an upper module press plate, a lower module bottom plate, and the like. There are multiple supporting and fixing trays and multiple expansion absorption layers. The multiple supporting and fixing trays are sequentially disposed from top to bottom layer by layer. One single electrochemical cell is disposed in each of the supporting and fixing trays. One expansion absorption layer is laid on a top surface of each single electrochemical cell. The upper module press plate is disposed in a manner of covering the topmost supporting and fixing tray. The lower module bottom plate is disposed on a bottom surface of the bottommost supporting and fixing tray. A strain sensor is disposed in the center of a top surface of the topmost single electrochemical cell. The strain sensor is connected to a battery management system (BMS) control board.

### SUMMARY

The invention is set out in the appended set of claims. As a first aspect, provided in the present disclosure is a battery pack, including a cell set, including a plurality of single cells stacked in sequence; an end plate, provided along a stacking direction of the plurality of single cells on an end of the cell set; a monitoring structure, provided on at least one lateral surface that is parallel to the plurality of single cells and the end plate, configured to monitor an expansion deformation value of the plurality of single cells; a battery management system, BMS, electrically connected to the monitoring structure, configured to calculate a deformation rate and a deformation velocity in a preset time according to the expansion deformation value so as to determine whether the battery pack is in a thermal runaway state according to the deformation rate and the deformation velocity.

As a second aspect, provided in the present disclosure is a vehicle, including a body and the aforementioned battery pack, and the battery pack is mounted to the body.

As a third aspect, provided in the present disclosure is a monitoring method for thermal runaway of the aforementioned battery pack, including: obtaining an expansion deformation value ΔL of single cells in a battery pack by a monitoring structure, and calculating, by a battery management system, BMS, based on the expansion deformation value ΔL, a deformation rate ε of the cells and a deformation velocity F(t) in a preset time t; determining whether the deformation rate ε is within a first preset range and whether the deformation velocity F(t) is within a second preset range; and confirming that the battery pack is in a thermal runaway state under a condition of a determination result is yes.

Since the single cells are expanded towards a great surface of the single cells when thermal runaway occurs, by setting a monitoring structure on a lateral surface of the single cells that is parallel to the end plate, the monitoring structure monitors the expansion deformation value of the single cells after expansion when thermal runaway occurs in the cells. The expansion deformation value is transmitted to the BMS, and the deformation rate and the deformation velocity in the preset time is calculated by the BMS according to the expansion deformation value, so that it is determined, by the BMS, whether the cell set is in a thermal runaway state according to the deformation rate and the deformation velocity. Then, the BMS may perform an alarm action subsequently under a condition of a determination result is yes. In such an arrangement, by monitoring the expansion deformation value after expansion when thermal runaway occurs in the single cells in the cell set, it is obtained a basis for determining whether the battery pack is in the thermal runaway state. Compared to a method of monitoring a temperature change or a pressure change of the battery pack, the method in the present disclosure is less affected by the surrounding environment and provided with higher accuracy.

### BRIEF DESCRIPTION OF THE DRAWINGS

Fig. 1 is a schematic structural diagram of the battery pack in an embodiment of the present disclosure;
Fig. 2 is a schematic structural diagram of the battery pack of Fig. 1 in a normal use state;
Fig. 3 is a schematic structural diagram of the battery pack of Fig. 1 in a thermal runaway state;
Fig. 4 is a schematic structural diagram of the cell of Fig. 1 in a thermal runaway state;
Fig. 5 is a schematic structural diagram of the monitoring structure in Fig. 2; and
Fig. 6 is a schematic flow diagram of the monitoring method for thermal runaway of a battery pack in another embodiment of the present disclosure.

The meanings of the reference numerals are as follows:
100 battery pack; 10 cell set; 11 single cell; 20 end plate; 30 monitoring structure; 31 strain gauge; 32 insulating protective member; 40 battery management system, BMS; 50 insulating sheet.

### DETAILED DESCRIPTION

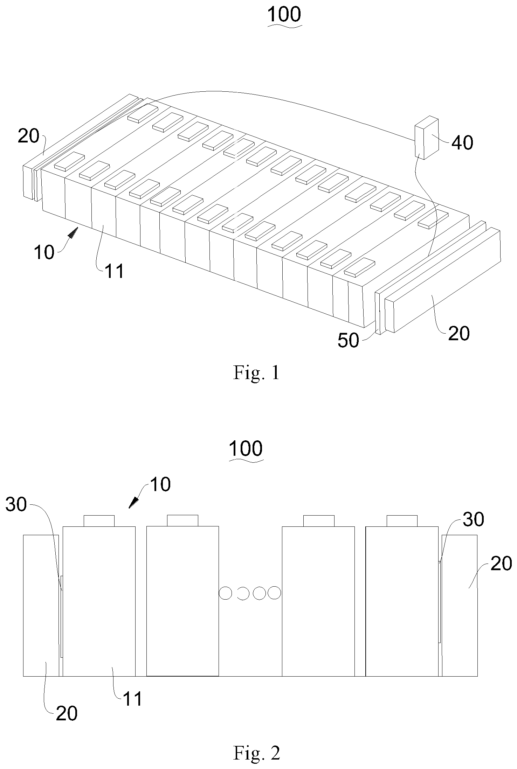

Referring to Figs. 1-5, provided in an embodiment of the present disclosure is a battery pack 100, including a cell set 10, an end plate 20, a monitoring structure 30, and a battery management system, BMS, 40.

Referring to Figs. 1-3, the cell set 10 includes a plurality of single cells 11 stacked in sequence. The end plate 20 is provided along a stacking direction of the plurality of single cells 11 on an end of the cell set 10. The monitoring structure 30 is provided on at least one lateral surface that is parallel to the plurality of single cells 11 and the end plate 20, and is configured to monitor an expansion deformation value ΔL of the plurality of single cells 11. The BMS 40 is electrically connected to the monitoring structure 30, and is configured to calculate a deformation rate ε and a deformation velocity F(t) in a preset time according to the expansion deformation value ΔL so as to determine whether the battery pack 100 is in a thermal runaway state according to the deformation rate ε and the deformation velocity F(t).

According to the battery pack 100, since the single cells 11 are expanded towards a great surface of the single cells 11 when thermal runaway occurs, by setting a monitoring structure 30 on a lateral surface of the single cells 11 that is parallel to the end plate 20, the monitoring structure 30 monitors the expansion deformation value ΔL of the single cells 11 after expansion when thermal runaway occurs in the single cells 11. The expansion deformation value ΔL is transmitted to the BMS 40, the deformation rate ε and the deformation velocity F(t) in the preset time is calculated, by the BMS 40, according to the expansion deformation value ΔL, so that it is determined, by the BMS 40, whether the cell set 10 is in a thermal runaway state according to the deformation rate ε and the deformation velocity F(t). Then, the BMS 40 may perform an alarm action subsequently under a condition of a determination result is yes. In such an arrangement, by monitoring the expansion deformation value ΔL after expansion when thermal runaway occurs in the single cells 11 in the cell set 10, it is obtained a basis for determining whether the battery pack 100 is in a thermal runaway state. Compared to a method of monitoring a temperature change or a pressure change of the battery pack 100, the method in the present disclosure is less affected by the surrounding environment and has higher accuracy.

In some implementations, the single cells 11 are prismatic cells. The prismatic cells form the battery pack 100 and have a lateral surface parallel to the end plate 20, and the lateral surface is a great surface of the prismatic cell. The prismatic cell is subjected to an expansion deformation in an extreme short time period towards the great surface when thermal runaway occurs. Therefore, the expansion deformation of the single cells 11 may be achieved by the monitoring structure 30 when thermal runaway occurs. The BMS 40 is configured to monitor a state of the battery pack, preventing the battery from being over charged or over discharged, so as to extend a service life of the battery, and is configured to detect the thermal runaway state of the battery, so as to ensure the safety of the battery during use.

Specifically, in some implementations, the monitoring structure 30 includes a strain gauge 31. The strain gauge 31 is a device for measuring the strain of an object, and includes an insulating substrate and a metal sensitive grid. When the strain gauge 31 is used to measure, the strain gauge 31 is connected to a surface of an object, for example, it is adhesively affixed to the great surface of the single cells 11. The sensitive grid also deforms when the single cells 11 are expanded and deformed due to thermal runaway, so the resistance of the sensitive grid changes accordingly. By receiving a tiny change in resistance of the sensitive grid, an actual strain value of each of the single cells 11 is converted, so that the expansion deformation value ΔL of each of the single cells 11 is obtained.

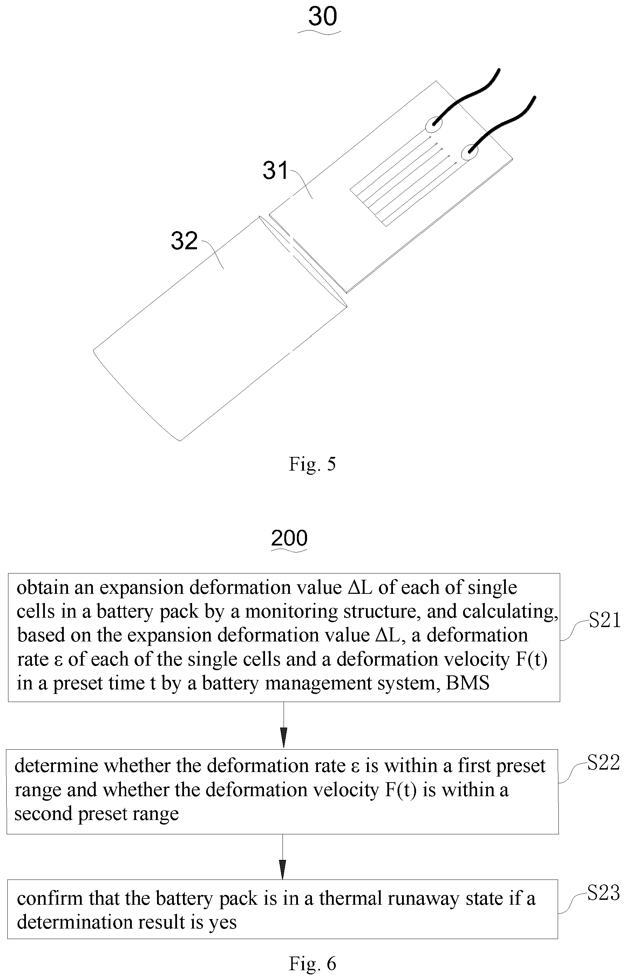

Referring to Fig. 5, there are bulges on, for example, the positions of welding, part the strain gauge 31 due to the arrangement of the wiring harness on the strain gauge 31 when adhering the strain gauge 31 to the great surface of each of the single cells 11. For avoiding the bulges from damaging the surface of each of the single cells 11, in some implementations, the battery pack 100 further includes an insulating protective member 32 wrapped around outside of the monitoring structure 30. In such an arrangement, by setting the insulating protective member 32 outside the strain gauge 31, the insulating protective member 32 may wrap around the bulges, avoiding the risk of scratching the protective film of each of the single cells 11 when adhering the strain gauge 31 to the surface of each of the single cells 11, as the bulging position may be in direct contact with the surface of each of the single cells 11.

Specifically, in some implementations, the insulating protective member 32 is a mica roll. The mica roll is an insulating material, which is formed by resin bonding and drying with mica paper as a base material, and glass or ceramic fibers as the reinforcing material. Also, adhesive may be applied to the surface of the mica roll, which may directly drive the strain gauge 31 to adhere to the surface of each of the single cells 11, facilitating the mounting of the strain gauge 31.

Specifically, in some implementations, a thickness of the strain gauge 31 and the mica paper wrapped around the outside of he strain gauge 31 is in a range of 0.2 mm to 0.3 mm. In such an arrangement, by setting a relative thin thickness, it prevents the entire battery pack 100 from being affected, avoiding an increase in a length of the battery pack 100 in a stacking direction of the single cells 11, so that the length of the battery pack 100 is kept within a resonable range. For example, a thickness of the strain gauge 31 with the mica paper may be set to correspond to a thickness of different single cells 11, such as 0.2 mm, 0.22 mm, 0.24 mm, 0.26 mm, 0.28 mm, or 0.3 mm, which is not limited herein.

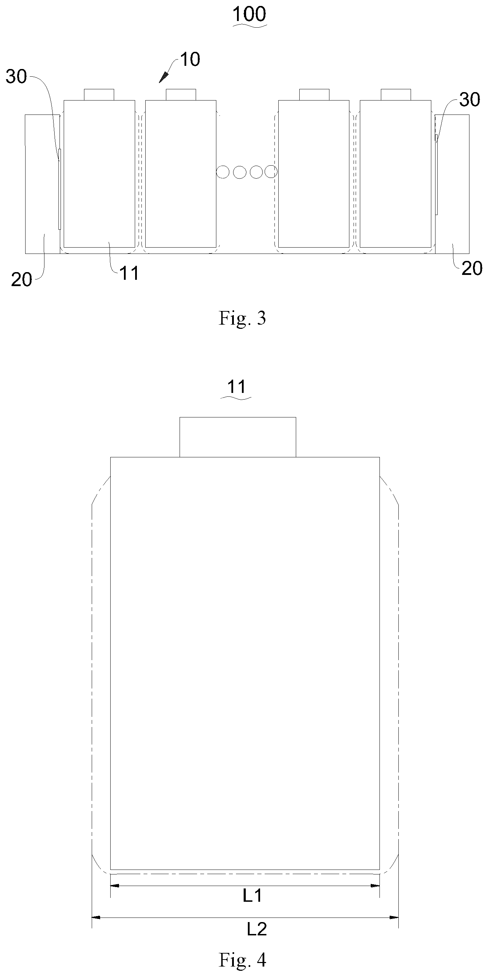

Referring to Figs. 2 and 3, in some implementations, when setting the monitoring structure 30 in the cell set 10, for ensuring the safety and the service life of the cell set 10, along a stacking direction of the cells 11, the monitoring structure 30 is provided on a single cell 11 on an end of the cell set 10, and on a side of the single cell 11 facing the end plate 20. Fig. 2 is a schematic structural diagram of the battery pack 100 in a normal use state. Fig. 3 is a schematic structural diagram of the battery pack 100 in a thermal runaway state after expansion.

Specifically, referring to Fig. 1, since an insulating sheet 50 is provided between the end plate 20 and the cell set 10, the monitoring structure 30 is provided between the insulating sheet 50 and the cell set 10, so that the monitoring structure 30 is provided on an end of the cell set 10, avoiding from affecting a normal expansion of the entire cell set 10 during use, so as to ensure the service life of the cell set 10 and ensure the safety of the cell set 10 during use. Also, since the monitoring structure 30 needs to be electrically connected to the BMS 40, by setting the monitoring structure 30 on an end of the cell set 10, it may lead to a reduction in installation cost of the monitoring structure 30, facilitating the electrical connection between the wiring harness and the BMS 40 after winding.

In such an arrangement, by means of the mounting of the aforementioned monitoring structure 30, when one single cell 11 in the cell set 10 is expanded when thermal runaway occurs, for example, when the single cell 11 located in a central area is expanded, the great surface of the single cell 11 is expanded and deformed, and is sequentially transmitted to the single cell 11 on an end, so that the monitoring structure 30 located on an end is able to monitor the expansion deformation value ΔL of the single cell 11.

In some implementations, in order to monitor a thermal runaway state in the cell set 10more accurately during use, monitoring structures 30 are provided on the single cells 11 on both ends of the cell set 10. In such an arrangement, the expansion of the cells 11 in the entire cell set 10 is able to be more accurately monitored, so that control commands are able to be sent via the BMS 40 more precisely. In some implementations, in order to lead to a reduction in mounting cost of the monitoring structure 30 under the premise of ensuring that the single cells 11 are able to be expanded normally, a monitoring structure 30 may be mounted every 1/3 of the way along a stacking direction of the single cells 11, or every 1/4 of the way, or every 1/5 of the way. In such an arrangement, the deformation of the cells 11 after expansion may be monitored more accurately, and the setup cost of the monitoring structure 30 may also be appropriately reduced.

A normal state of use of the single cells 11 is shown in Fig. 1, and a state after the single cells 11 expand after a thermal runaway is shown by the dash lines in Figs. 3 and 4.

Whether a thermal runaway occurs in the cell set 10 is determined by the deformation rate ε and the deformation velocity F(t) according to the expansion deformation value ΔL and as follows. For example, referring to Fig. 4, an initial thickness of a single cell 11 is L1 = 25 mm. A thickness L1 = 25 mm is increased to L2 = 30 mm within a preset time, for example, t = 3 s when the single cell 11 undergoes a thermal expansion. For example, the dash lines in Figs. 3 and 4 show the state of thermal expansion, where the expansion deformation value of the single cell 11 is ΔL = 5 mm, the deformation rate ε = (L2- L1)/L1 = 2%, and the deformation velocity F(t) = ε/t = 2%/3 s ≈ 0.67%/s. Under a condition of at least one of the deformation rate of 2% and the deformation velocity of 0.67% fall/falls within the preset range for thermal runaway, it indicates that thermal runaway has occurred in the single cell 11.

Specifically, in some implementations, at least one of the following for the single cell 11 when thermal runaway occurs is met: (a) the preset range of deformation rate 2%<ε<8%; and (b) deformation velocity 0.4%/s<F(t)<2%/s.

Under a condition of at least one of the deformation rate ε and the deformation velocity F(t) calculated by the BMS 40 based on the expansion deformation value ΔL of the single cell 11 monitored by the monitoring structure 30 meet/meets the aforementioned range, it indicates that the battery pack 100 is in the thermal runaway state, and the BMS 40 needs to perform an alarm action subsequently.

According to the aforementioned battery pack 100, by setting the monitoring structure 30 in the cell set 10 to monitor the expansion deformation value ΔL of the single cell 11 by the monitoring structure 30, the expansion deformation value ΔL is then transmitted to the BMS 40, and the deformation rate ε and the deformation velocity F(t) are calculated by the BMS 40. Under a condition of both the deformation rate ε and the deformation velocity F(t) meet the preset range of the single cell 11 when thermal runaway occurs, it indicates that the single cell 11 is in a state of thermal runaway, and the BMS 40 may transmit an alarm signal, so as to ensure the safe evacuation of the occupants.

Referring to Fig. 6, provided in a second embodiment of the present disclosure is a monitoring method for thermal runaway of the aforementioned battery pack 100, including following steps:

in step S21, an expansion deformation value ΔL of single cells 11 in a battery pack 100 is obtained by a monitoring structure 30, and a deformation rate ε of the single cells 11 and a deformation velocity F(t) in a preset time t are calculated by a battery management system, BMS, 40 based on the expansion deformation value ΔL, in which an initial thickness of the single cells 11 is L1, an expanded thickness thereof when thermal runaway occurs is L2, the expansion deformation value ΔL=L2-L1, the deformation rate of the single cells 11, ε=(L2-L1)/L1*100%, and the deformation velocity in a preset time t, F(t)=ε/t.

Before the aforementioned step, provided are a monitoring structure 30 and a battery pack 100. The battery pack 100 includes single cells 11 and an end plate 20 provided in a stacking direction on an end of the single cells 11, and the end plate 20 is provided in parallel to the great surface of each of the single cells 11. The single cell 11 may be a prismatic cell. The prismatic cell may be an aluminum case cell, and may be a rechargeable cell, such as a blade cell. Expansion occurs on the great surface of each of the single cells 11 when one or more of the single cells 11 in the cell set 10 undergo thermal expansion. The single cells 11 transmit the expansion to each other, causing the surrounding single cells 11 to expand. In such an arrangement, the monitoring structure located on an end is able to monitor a thermal runaway state of the cell set 10.

In some implementations, the monitoring structure 30 includes a strain gauge 31 and an insulating protective member 32 wrapped around outside of the strain gauge 31. The resistance of the strain gauge 31 changes correspondingly when the single cells are expanded and deformed under thermal runaway. The change in resistance obtained is converted into an actual strain value, so that the expansion deformation value ΔL of the single cells 11 is obtained. Also, by means of wrapping around the strain gauge 31 with an insulating protective member 32, there are bulges on, for example, the positions of welding, part the strain gauge 31 due to the arrangement of the wiring harness. For avoiding the bulges from damaging the surface of each of the single cells 11, in some implementations, the battery pack 100 further includes an insulating protective member 32 wrapped around outside of the monitoring structure 30, avoiding the risk of scratching the protective film of each of the single cells 11 when adhering the strain gauge 31 to the surface of each of the single cells 11, as the bulging position may be in direct contact with the surface of each of the single cells 11.

Specifically, in some implementations, the insulating protective member 32 is mica paper. Adhesive is provided on the mica paper, so as to facilitate direct adhesion of the entire monitoring structure 30 to the surface of the battery.

In some implementations, the monitoring structure 30 is mounted on at least one of the lateral surfaces of the single cells 11 that are parallel to the end plate 20 before measurement.

When setting the monitoring structure 30 in the cell set 10, for ensuring the safety and the service life of the cell set 10, along a stacking direction of the cells 11, the monitoring structure 30 is provided on a single cell 11 located at an end of the cell set 10, and on a lateral surface of the single cell 11 facing the end plate 20. In some implementations, in order to monitor the thermal runaway state in the cell set 10 during use more accurately, monitoring structures 30 are provided on the single cells 11 on both ends of the cell set 10. In such an arrangement, the expansion of the cells 11 in the entire cell set 10 is able to be more accurately monitored, so that more precise control commands are able to be issued via the BMS 40. In some implementations, under the premise of ensuring that the single cells 11 are able to be expanded normally, and also leading to a reduction in mounting cost of the monitoring structure 30, a monitoring structure 30 may be mounted every 1/3 of the way along a stacking direction of the single cells 11, or every 1/4 of the way, or every 1/5 of the way. In such an arrangement, the deformation of the cells 11 after expansion may be monitored more accurately, and the setup cost of the monitoring structure 30 may also be appropriately reduced.

After completing the mounting of the battery pack 100, the expansion deformation value ΔL of the single cells 11 is obtained by the monitoring structure 30 in the present step. That is, the deformation rate ε and the deformation velocity F(t) in a preset time are obtained by the ΔL and are used for further determination.

The expansion deformation value ΔL in the present step indicates the expansion deformation value of the single cell 11 after actual expansion that is able to be monitored by the monitoring structure 30 when expansion occurs in the single cell 11. For example, an initial thickness of the single cell 11 is L1 = 25 mm. A thickness L1 = 25 mm is increased to L2 = 30 mm within a preset time, for example, t = 3 s, then the expansion deformation value of the single cell 11 is ΔL = 5 mm, the deformation rate ε = (L2- L1)/L1 = 2%, and the deformation velocity F(t) = ε/t = 2%/3 s ≈ 0.67%/s. Taking an initial thickness of the single cell 11 L1 = 25 mm also as an example, a thickness L1 = 25 mm is increased to L2 = 35 mm within a preset time, for example, t = 4 s, then the expansion deformation value of the single cell 11 is ΔL = 10 mm, the deformation rate ε = (L2-L1)/L1 = 10/25 = 4%, and the deformation velocity F(t) = ε/t = 4%/4 s = 1%/s. Under a condition of at least one of the deformation rate and the deformation velocity fall/falls within the preset range for thermal runaway, it indicates that thermal runaway has occurred in the battery pack 100. In order to ensure the accuracy of the determination, it is necessary to obtain not only the deformation rate ε but also the deformation velocity F(t), as the single cell 11 may expand due to environmental influences or self-heating during long-term use. Under a condition of only the deformation rate ε is monitored, a false determination may occur. A single cell 11 may expand in a relatively short time during thermal runaway. Under a condition of the monitored deformation velocity F(t) meets a preset condition, a more accurate determination is made as to whether a thermal runaway state occursby using this as a basis for subsequent steps in the determination, thereby avoiding false determinations.

Step S22: determining whether the deformation rate ε is within a first preset range and whether the deformation velocity F(t) is within a second preset range.

The deformation rate ε and deformation velocity F(t) of the single cell 11 obtained in the previous step are determined in the present step and compared with the preset range.

Specifically, at least one of the following is met: (a) the first preset range is 2%<ε<8%; and (b) the second preset range is 0.4%/s<F(t)<2%/s.

Step S23: confirming that the battery pack is in a thermal runaway state under a condition of a determination result is yes.

In the aforementioned step, under a condition of at least one of the following is met: (a) the obtained deformation rate ε falls within the range of 2%<ε<8%; and (b) the obtained deformation velocity F(t) falls within the range of 0.4%/s<F(t)<2%/s, it indicates that the battery pack 100 is in a thermal runaway state.

Since prismatic batteries have different thicknesses, the thicker the prismatic battery, the greater the deformation. Therefore, the preset range of the deformation rate is set to 2% < ε < 8%, and the preset range of the deformation velocity is set to 0.4%/s<F(t)<2%/s. Under a condition of at least one of the deformation rate ε and the deformation velocity F(t) fall/falls within the preset range, it indicates that thermal runaway occurs in the single cells 11 of the battery pack 100, that is, the battery pack 100 is in a thermal runaway state. It accurately determines that the battery pack 100 is in a thermal runaway state when both of the deformation rate ε and the deformation velocity F(t) fall within the preset range, leading to a reduction in the possibility of false determination.

For example, according to the aforementioned two listed examples, ε = 2%, F(t) ≈ 0.67%, which is consistent with the range of 2% < ε < 8% and the range of 0.4%/s < F(t) < 2%/s; and ε = 4%, F(t) = 1%, which is also consistent with the range 2% < ε < 8% and 0.4%/s < F(t) < 2%/s. Therefore, it indicates that the battery pack 100 is in a thermal runaway state.

In order to ensure the accuracy of the determination, before the step of obtaining the expansion deformation value ΔL of the single cells 11 by the monitoring structure 30, the monitoring method for thermal runaway of the battery pack 100 further includes:
obtaining a voltage and a temperature of the battery pack 100;
determining whether a ratio x of a voltage drop in a preset time t' to an initial voltage value is within a third preset range and whether a temperature rise rate y in a preset time t' is within a fourth preset range; and
performing obtaining the expansion deformation value ΔL of each of the single cells 11 in the battery pack 100 by the monitoring structure 30 under a condition of a determination result is yes.

In order to avoid false determinations, before obtaining the deformation rate ε and the deformation velocity F(t), it is also necessary to obtain the voltage and temperature inside the battery pack 100, and determine whether the voltage drop value and temperature rise rate in a preset time t' are within a respective preset range. The subsequent step of obtaining the expansion deformation value ΔL of each of the single cells 11 is only performed when the voltage drop value and temperature rise rate in the preset time t' also meet the conditions, ensuring the accuracy of determining whether the battery pack 100 is in a thermal runaway state.

The initial voltage of the battery pack is V1, the voltage at the preset time t' is V2, the voltage drop ΔV=(V2-V1), and the ratio of the voltage drop to the initial voltage x =ΔV /V1*100%. The initial temperature of the battery pack is T1, the temperature at the preset time t' is T2, and the temperature rise rate y= (T2- T1)/ t*100%.

Specifically, in some implementations, the preset time t' ≥ 3 s; the third preset range, the ratio of the voltage drop to the initial voltage, is x ≥ 25%; and the fourth preset range, the temperature rise rate, is y ≥ 1 °C/s.

For example, an initial voltage of the battery pack 100 is V1 = 100 V, then the voltage is decreased to V2 = 70 V, and the ratio of the voltage drop to the initial voltage x = 30/100*100% = 30% > 25%, which meets the third preset range. Also, an initial temperature of the battery pack 100 is T1 = 60°C, then the temperature of the battery pack 100 is reached to T2 = 70°C within the time t' = 3 s, and the temperature rise rate y = (T2-T1)/t'*100% = 10/3 = 3.33 °C/s, which meets the fourth preset range. In this case, both the ratio of the voltage drop to the initial voltage and the temperature rise rate of the battery pack 100 meet their respective preset ranges. In some implementations, combined with the deformation rate ε and the deformation velocity F(t), it is possible to determine whether the battery pack 100 is in a thermal runaway state, avoiding false determinations.

It should be noted that, in some implementations, when adopting the monitoring method for thermal runaway of the battery pack 100 to monitor a thermal runaway state of the battery pack 100, when the single cells 11 are in a high state of charge (SOC) or low state of health (SOH), the single cells 11 are in a swollen state due to cyclic gas production. In such a case, there is a higher risk of thermal runaway for single cells 11. Therefore, it is more accurate to monitor the thermal runaway state of the single cells 11 by monitoring the end of line (EOL) via the strain gauge 31, which may avoid false alarms.

Provided in another embodiment of the present disclosure is further a vehicle, the vehicle includes a body and a battery pack 100 mentioned above, and the battery pack 100 is mounted to the body.

According to the aforementioned vehicle, since a monitoring structure 30 is provided in the battery pack 100 mounted to the body, the monitoring structure 30 is able to obtain the expansion deformation value ΔV of the single cells 11 in the battery pack 100. The expansion deformation value ΔV is transmitted to the BMS 40, the deformation rate ε and the deformation velocity F(t) in the preset time is calculated, by the BMS 40, according to the expansion deformation value ΔV, so that it is determined, by the BMS, whether the battery pack 100 is in the thermal runaway state according to the deformation rate ε and the deformation velocity F(t). Then, the BMS 40 may perform an alarm action subsequently under a condition of a determination result is yes. In such an arrangement, by monitoring the expansion deformation value ΔV after expansion when thermal runaway occurs in the cells 11 in the battery pack 100, it is obtained a basis for determining whether the battery pack 100 is in a thermal runaway state. Compared to a method of monitoring a temperature change or a pressure change of the battery pack 100, the method in the present disclosure is less affected by the surrounding environment and provided with higher accuracy, which lead to an increase in the use safety of the vehicle during use.

## Claims

1. A battery pack (100), comprising:
a cell set (10), comprising a plurality of single cells (11) stacked in sequence;
an end plate (20), provided along a stacking direction of the plurality of single cells (11) on an end of the cell set (10);
a monitoring structure (30), provided on at least one lateral surface that is parallel to the plurality of single cells (11) and the end plate (20), configured to monitor an expansion deformation value of the plurality of single cells (11); and
a battery management system, BMS (40), electrically connected to the monitoring structure (30), configured to calculate a deformation rate and a deformation velocity in a preset time according to the expansion deformation value so as to determine whether the battery pack (100) is in a thermal runaway state according to the deformation rate and the deformation velocity.

2. The battery pack (100) according to claim 1, wherein the monitoring structure (30) comprises a strain gauge (31).

3. The battery pack (100) according to claim 2, wherein the monitoring structure (30) further comprises an insulating protective member (32) wrapped around outside of the strain gauge (31).

4. The battery pack (100) according to any one of claims 1-3, wherein, along a stacking direction of the plurality of single cells (11), the monitoring structure (30) is provided on a single cell (11) located on an end of the cell set (10), and on a side of the single cell (11) facing the end plate (20).

5. The battery pack (100) according to claim 4, wherein, along a stacking direction of the plurality of single cells (11), each of the cells located on two ends of the cell set (10) is provided with the monitoring structure (30).

6. The battery pack (100) according to any one of claims 1-3, or 5, wherein a thickness range of the monitoring structure (30) in a stacking direction of the plurality of single cells (11) is 0.2 mm - 0.3 mm.

7. A vehicle, comprising a body and the battery pack (100) according to any one of claims 1-6, wherein the battery pack (100) is mounted to the body.

8. A monitoring method for thermal runaway of the battery pack (100) according to any one of claims 1-6, comprising:
obtaining an expansion deformation value ΔL of each of the plurality of single cells (11) in the battery pack (100) by the monitoring structure (30), and calculating, based on the expansion deformation value ΔL, a deformation rate ε of each of the plurality of single cells (11) and a deformation velocity F(t) in a preset time t by the battery management system, BMS (40);
determining whether the deformation rate ε is within a first preset range and whether the deformation velocity F(t) is within a second preset range; and
confirming that the battery pack (100) is in a thermal runaway state under a condition of a determination result is yes.

9. The monitoring method for thermal runaway according to claim 8, wherein an initial thickness of each of the plurality of single cells (11) is L1, an expanded thickness thereof when thermal runaway occurs is L2, the expansion deformation value ΔL=L2-L1, the deformation rate of each of the plurality of single cells (11), ε=(L2-L1)/L1*100%, and the deformation velocity in a preset time t, F(t)=ε/t.

10. The monitoring method for thermal runaway according to claim 8, wherein the first preset range is: 2%<ε<8%.

11. The monitoring method for thermal runaway according to claim 8 or 10, wherein the second preset range is: 0.4%/s<F(t)<2%/s.

12. The monitoring method for thermal runaway according to any one of claims 8-11, wherein, before the obtaining the expansion deformation value ΔL of each of the plurality of single cells (11) in the battery pack (100) by the monitoring structure (30), and calculating, by the battery management system, BMS (40), based on the expansion deformation value ΔL, the deformation rate ε of each of the plurality of single cells (11) and the deformation velocity F(t) in the preset time t, the monitoring method for thermal runaway of the battery pack (100) further comprises:
obtaining a voltage and a temperature of the battery pack (100);
determining whether a ratio x of a voltage drop in a preset time t' to an initial voltage value is within a third preset range and whether a temperature rise rate y in the preset time t' is within a fourth preset range; and
performing obtaining the expansion deformation value ΔL of each of the plurality of single cells (11) in the battery pack (100) by the monitoring structure (30) under a condition of a determination result is yes.

13. The monitoring method for thermal runaway according to claim 12, wherein the preset time is: t'≥3s; the third preset range is: x≥25%; and the fourth preset range is: y≥1°C/s.

## Patentansprüche

1. Batteriepack (100), umfassend:
einen Zellensatz (10), der eine Vielzahl von einzelnen Zellen (11) umfasst, die in einer Abfolge gestapelt sind;
eine Endplatte (20), die entlang einer Stapelrichtung der Vielzahl von einzelnen Zellen (11) an einem Ende des Zellensatzes (10) bereitgestellt ist;
eine Überwachungsstruktur (30), die an mindestens einer seitlichen Fläche bereitgestellt ist, die parallel zu der Vielzahl von einzelnen Zellen (11) und der Endplatte (20) ist, konfiguriert zum Überwachen eines Dehnungsverformungswerts der Vielzahl von einzelnen Zellen (11); und
ein Batteriemanagementsystem, BMS (40), das mit der Überwachungsstruktur (30) elektrisch verbunden ist, konfiguriert zum Berechnen einer Verformungsrate und einer Verformungsgeschwindigkeit in einer voreingestellten Zeitspanne gemäß dem Dehnungsverformungswert, um gemäß der Verformungsrate und der Verformungsgeschwindigkeit zu bestimmen, ob sich das Batteriepack (100) in einem Zustand des thermischen Durchgehens befindet.

2. Batteriepack (100) nach Anspruch 1, wobei die Überwachungsstruktur (30) einen Dehnungsmesser (31) umfasst.

3. Batteriepack (100) nach Anspruch 2, wobei die Überwachungsstruktur (30) weiter ein isolierendes Schutzelement (32) umfasst, das um die Außenseite des Dehnungsmessers (31) gewickelt ist.

4. Batteriepack (100) nach einem der Ansprüche 1-3, wobei, entlang einer Stapelrichtung der Vielzahl von einzelnen Zellen (11), die Überwachungsstruktur (30) an einer einzelnen Zelle (11), die sich an einem Ende des Zellensatzes (10) befindet, und an einer Seite der einzelnen Zelle (11) bereitgestellt ist, die der Endplatte (20) zugewandt ist.

5. Batteriepack (100) nach Anspruch 4, wobei, entlang einer Stapelrichtung der Vielzahl von einzelnen Zellen (11), an jeder der Zellen, die sich an zwei Enden des Zellensatzes (10) befinden, die Überwachungsstruktur (30) bereitgestellt ist.

6. Batteriepack (100) nach einem der Ansprüche 1-3 oder 5, wobei ein Dickenbereich der Überwachungsstruktur (30) in einer Stapelrichtung der Vielzahl von einzelnen Zellen (11) 0,2 mm - 0,3 mm beträgt.

7. Fahrzeug, umfassend einen Körper und das Batteriepack (100) nach einem der Ansprüche 1-6, wobei das Batteriepack (100) an dem Körper befestigt ist.

8. Überwachungsverfahren für thermisches Durchgehen des Batteriepacks (100) nach einem der Ansprüche 1-6, umfassend:
Ermitteln eines Dehnungsverformungswerts ΔL von jeder der Vielzahl von einzelnen Zellen (11) in dem Batteriepack (100) durch die Überwachungsstruktur (30), und Berechnen, auf der Grundlage des Dehnungsverformungswerts ΔL, einer Verformungsrate ε von jeder der Vielzahl von einzelnen Zellen (11) und einer Verformungsgeschwindigkeit F(t) in einer voreingestellten Zeitspanne t durch das Batteriemanagementsystem, BMS (40);
Bestimmen, ob die Verformungsrate ε in einem ersten voreingestellten Bereich liegt und ob die Verformungsgeschwindigkeit F(t) in einem zweiten voreingestellten Bereich liegt; und
Bestätigen, dass sich das Batteriepack (100) in einem Zustand des thermischen Durchgehens befindet, unter der Bedingung, dass ein Bestimmungsergebnis "Ja" lautet.

9. Überwachungsverfahren für thermisches Durchgehen nach Anspruch 8, wobei eine anfängliche Dicke von jeder der Vielzahl von einzelnen Zellen (11) L1 ist, eine gedehnte Dicke davon beim Auftreten von thermischem Durchgehen L2 ist, der Dehnungsverformungswert ΔL = L2-L1, die Verformungsrate von jeder der Vielzahl von einzelnen Zellen (11) ε = (L2-L1)/L1*100 % und die Verformungsgeschwindigkeit in einer voreingestellten Zeitspanne t F(t) = ε/t.

10. Überwachungsverfahren für thermisches Durchgehen nach Anspruch 8, wobei der erste voreingestellte Bereich Folgendes ist: 2 % < ε < 8 %.

11. Überwachungsverfahren für thermisches Durchgehen nach Anspruch 8 oder 10, wobei der zweite voreingestellte Bereich Folgendes ist: 0,4 %/s < F(t) < 2 %/s.

12. Überwachungsverfahren für thermisches Durchgehen nach einem der Ansprüche 8-11, wobei, vor dem Ermitteln des Dehnungsverformungswerts ΔL von jeder der Vielzahl von einzelnen Zellen (11) in dem Batteriepack (100) durch die Überwachungsstruktur (30) und dem Berechnen, durch das Batteriemanagementsystem, BMS (40), auf der Grundlage des Dehnungsverformungswerts ΔL, der Verformungsrate ε von jeder der Vielzahl von einzelnen Zellen (11) und der Verformungsgeschwindigkeit F(t) in der voreingestellten Zeitspanne t, das Überwachungsverfahren für thermisches Durchgehen des Batteriepacks (100) weiter umfasst:
Ermitteln einer Spannung und einer Temperatur des Batteriepacks (100);
Bestimmen, ob ein Verhältnis x eines Spannungsabfalls in einer voreingestellten Zeitspanne t' auf einen anfänglichen Spannungswert in einem dritten voreingestellten Bereich liegt und ob eine Temperaturanstiegsrate y in der voreingestellten Zeitspanne t' in einem vierten voreingestellten Bereich liegt; und
Durchführen des Ermittelns des Dehnungsverformungswerts ΔL von jeder der Vielzahl von einzelnen Zellen (11) in dem Batteriepack (100) durch die Überwachungsstruktur (30) unter der Bedingung, dass ein Bestimmungsergebnis "Ja" lautet.

13. Überwachungsverfahren für thermisches Durchgehen nach Anspruch 12, wobei die voreingestellte Zeitspanne Folgendes ist: t' ≥ 3 s; der dritte voreingestellte Bereich ist: x ≥ 25 %; und der vierte voreingestellte Bereich ist: y ≥ 1 °C/s.

## Revendications

1. Bloc-batterie (100), comprenant :
un ensemble (10) de cellules, comprenant une pluralité de cellules simples (11) empilées en séquence ;
une plaque d'extrémité (20), prévue le long d'une direction d'empilement de la pluralité de cellules simples (11) sur une extrémité de l'ensemble (10) de cellules ;
une structure de surveillance (30), prévue sur au moins une surface latérale qui est parallèle à la pluralité de cellules simples (11) et à la plaque d'extrémité (20), configurée pour surveiller une valeur de déformation par dilatation de la pluralité de cellules simples (11) ; et
un système (40) de gestion de batterie, BMS, connecté électriquement à la structure de surveillance (30), configuré pour calculer un taux de déformation et une vitesse de déformation dans un temps prédéfini en fonction de la valeur de déformation par dilatation de manière à déterminer si le bloc-batterie (100) est dans un état d'emballement thermique en fonction du taux de déformation et de la vitesse de déformation.

2. Bloc-batterie (100) selon la revendication 1, dans lequel la structure de surveillance (30) comprend une jauge (31) de contrainte.

3. Bloc-batterie (100) selon la revendication 2, dans lequel la structure de surveillance (30) comprend en outre un organe de protection isolant (32) enveloppé autour de l'extérieur de la jauge (31) de contrainte.

4. Bloc-batterie (100) selon l'une quelconque des revendications 1 à 3, dans lequel, le long d'une direction d'empilement de la pluralité de cellules simples (11), la structure de surveillance (30) est prévue sur une cellule simple (11) située sur une extrémité de l'ensemble (10) de cellules, et sur un côté de la cellule simple (11) faisant face à la plaque d'extrémité (20).

5. Bloc-batterie (100) selon la revendication 4, dans lequel, le long d'une direction d'empilement de la pluralité de cellules simples (11), chacune des cellules situées sur deux extrémités de l'ensemble (10) de cellules est dotée de la structure de surveillance (30).

6. Bloc-batterie (100) selon l'une quelconque des revendications 1 à 3 ou la revendication 5, dans lequel une plage d'épaisseur de la structure de surveillance (30) dans une direction d'empilement de la pluralité de cellules simples (11) est de 0,2 mm à 0,3 mm.

7. Véhicule, comprenant un corps et le bloc-batterie (100) selon l'une quelconque des revendications 1 à 6, dans lequel le bloc-batterie (100) est monté sur le corps.

8. Procédé de surveillance d'emballement thermique du bloc-batterie (100) selon l'une quelconque des revendications 1 à 6, comprenant :
une obtention d'une valeur de déformation par dilatation ΔL de chacune de la pluralité de cellules simples (11) dans le bloc-batterie (100) par la structure de surveillance (30), et un calcul, sur la base de la valeur de déformation par dilatation ΔL, d'un taux de déformation ε de chacune de la pluralité de cellules simples (11) et d'une vitesse de déformation F(t) dans un temps prédéfini t par le système (40) de gestion de batterie, BMS ;
une détermination de si le taux de déformation ε se situe dans une première plage prédéfinie et de si la vitesse de déformation F(t) se situe dans une deuxième plage prédéfinie ; et
une confirmation que le bloc-batterie (100) est dans un état d'emballement thermique à condition qu'un résultat de détermination soit positif.

9. Procédé de surveillance d'emballement thermique selon la revendication 8, dans lequel une épaisseur initiale de chacune de la pluralité de cellules simples (11) est L1, une épaisseur élargie de celle-ci lorsqu'un emballement thermique se produit est L2, la valeur de déformation par dilatation ΔL=L2-L1, le taux de déformation de chacune de la pluralité de cellules simples (11), ε =(L2-L1)/L1*100 % et la vitesse de déformation dans un temps prédéfini t, F(t)=ε/t.

10. Procédé de surveillance d'emballement thermique selon la revendication 8, dans lequel la première plage prédéfinie est : 2 %<ε<8 %.

11. Procédé de surveillance d'emballement thermique selon la revendication 8 ou la revendication 10, dans lequel la deuxième plage prédéfinie est : 0,4 %/s<F(t)<2 %/s.

12. Procédé de surveillance d'emballement thermique selon l'une quelconque des revendications 8 à 11, dans lequel, avant l'obtention de la valeur de déformation par dilatation ΔL de chacune de la pluralité de cellules simples (11) dans le bloc-batterie (100) par la structure de surveillance (30), et le calcul, par le système (40) de gestion de batterie, BMS, sur la base de la valeur de déformation par dilatation ΔL, du taux de déformation ε de chacune de la pluralité de cellules simples (11) et de la vitesse de déformation F(t) dans le temps prédéfini t, le procédé de surveillance d'emballement thermique du bloc-batterie (100) comprend en outre :
une obtention d'une tension et d'une température du bloc-batterie (100) ;
une détermination de si un rapport x d'une chute de tension dans un temps prédéfini t' sur une valeur de tension initiale se situe dans une troisième plage prédéfinie et de si un taux d'augmentation de température y dans le temps prédéfini t' se situe dans une quatrième plage prédéfinie ; et
la fait d'effectuer une obtention de la valeur de déformation par dilatation ΔL de chacune de la pluralité de cellules simples (11) dans le bloc-batterie (100) par la structure de surveillance (30) à condition qu'un résultat de détermination soit positif.

13. Procédé de surveillance d'emballement thermique selon la revendication 12, dans lequel le temps prédéfini est : t'≥3s ; la troisième plage prédéfinie est : x≥25 % ; et la quatrième plage prédéfinie est : y>1 °C/s.
